# EUROPEAN PATENT APPLICATION

(11) **EP 4 815 087 A1**
(43) Date of publication of application: **30.09.2026**
(21) Application number: 24911505.6
(22) Date of filing: 27.12.2024
(51) Int. Cl.: H01M 10/0525

(54) **BATTERY**

(30) Priority: 29.12.2023 CN 202311857199
(71) Applicant: Zhuhai CosMX Battery Co., Ltd., Zhuhai, Guangdong 519180 (CN)
(72) Inventor: WANG, Hai, Zhuhai, Guangdong 519180 (CN); FAN, Yanan, Zhuhai, Guangdong 519180 (CN); LI, Suli, Zhuhai, Guangdong 519180 (CN); ZENG, Changan, Zhuhai, Guangdong 519180 (CN); MU, Yingdi, Zhuhai, Guangdong 519180 (CN); SONG, Longchu, Zhuhai, Guangdong 519180 (CN); QIU, Yaming, Zhuhai, Guangdong 519180 (CN)
(74) Representative: Murgitroyd & Company
(86) International application number: PCT/CN2024/143271
(87) International publication number: WO 2025/140589

(57) **Abstract**

The present disclosure relates to the field of batteries, and in particular relates to a battery. The battery includes a positive electrode plate and an electrolyte, where the positive electrode plate includes a positive electrode active material layer, an XRD diffraction pattern of the positive electrode active material layer has a 012 diffraction peak and a 006 diffraction peak, and a difference between an angle value of the 012 diffraction peak and an angle value of the 006 diffraction peak is > 0.1°; and the electrolyte includes a first additive, and the first additive includes element O and a cyano group. In the present disclosure, the positive electrode plate and electrolyte in the battery synergistically improve the cycling performance and safety performance of the battery.

## Description

### TECHNICAL FIELD

The present disclosure relates to the field of batteries, and in particular relates to a battery.

### BACKGROUND

The electrolyte in a lithium-ion battery is a very important component. Its function is to provide an ion transport channel between the positive and negative electrodes, and it also determines the capacity, rate performance and safety performance of the battery. Nitrile additives are common electrolyte additives that can improve the capacity and rate performance of the battery, and therefore their research in the field of lithium-ion batteries has attracted much attention. However, nitrile additives have poor adsorption and protection effects on the positive electrode plate, and also have poor chemical stability. They are easy to decompose and produce harmful gases, which affects the cycling performance and safety performance of the battery.

### SUMMARY

An object of the present disclosure is to provide a battery to overcome the aforementioned problems in the prior art. In the present disclosure, the positive electrode plate and electrolyte in the battery exhibit synergistic effect, thus improving the cycling performance and safety performance of the battery.

The present disclosure provides a battery, including a positive electrode plate and an electrolyte, where the positive electrode plate includes a positive electrode current collector and a positive electrode active material layer on a surface of at least one side of the positive electrode current collector, an XRD diffraction pattern of the positive electrode active material layer has a 012 diffraction peak and a 006 diffraction peak, and a difference between an angle value of the 012 diffraction peak and an angle value of the 006 diffraction peak is >0.1°; and the electrolyte includes a first additive, and the first additive includes element O and a cyano group.

By means of the technical solutions described above, the present disclosure has at least the following advantages over the prior art: the battery of the present disclosure has a specially designed positive electrode plate and an electrolyte, which can exhibit synergistic effect, and the additives in the electrolyte can form stable adsorption on the surface of the positive electrode plate, thereby reducing the risk of side reactions between the electrolyte and the positive electrode plate, improving the stability of the positive electrode plate and improving the safety performance and cycling performance of the battery.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### BRIEF DESCRIPTION OF THE DRAWINGS

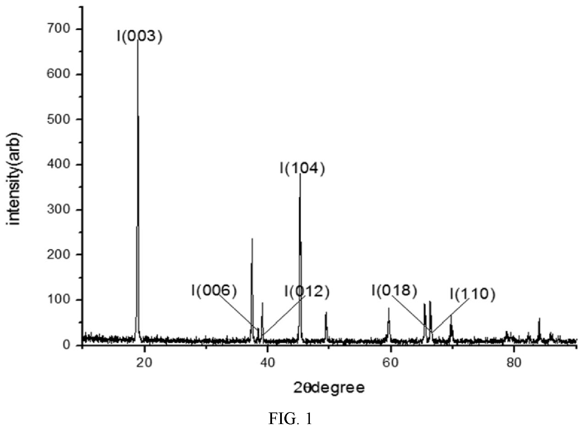

FIG.1 shows an XRD diffraction pattern of a positive electrode active material layer in an example of the present disclosure.

### DETAILED DESCRIPTION OF THE EMBODIMENTS

Hereinafter, specific embodiments of the present disclosure will be described in detail. It should be understood that the specific embodiments described herein are only used to illustrate and explain the present disclosure and are not used to limit the present disclosure.

The present disclosure provides a battery, which may include a positive electrode plate and an electrolyte.

The positive electrode plate may include a positive electrode current collector and a positive electrode active material layer on a surface of at least one side of the positive electrode current collector, an XRD diffraction pattern of the positive electrode active material layer has a 012 diffraction peak and a 006 diffraction peak, and a difference between an angle value of the 012 diffraction peak and an angle value of the 006 diffraction peak is > 0.1° (for example 0.11°, 0.15°, 0.2°, 0.25°, 0.3°, 0.35°, 0.4°, 0.45°, 0.5°, 0.55°, 0.6°, 0.65°, 0.7°, 0.75°, 0.8°, 0.85°, 0.9°, 0.95°, 1° or 1.05°). FIG.1 shows an XRD diffraction pattern of a positive electrode active material layer in an example of the present disclosure. As can be seen from the figure, the XRD diffraction pattern of the positive electrode active material layer has a 012 diffraction peak and a 006 diffraction peak, wherein the angle value of the 012 diffraction peak is 39.09° and the angle value of the 006 diffraction peak is 38.42°, the difference therebetween is 0.67°, which is greater than 0.1°.

The electrolyte may include a first additive, and the first additive may include element O and a cyano group.

Nitrile additives are often used as electrolyte additives because their capability of improving the capacity and rate performance of batteries. However, nitrile additives have poor adsorption and protection effects for positive electrode plate as well as poor chemical stability. In the present disclosure, the combined use of a specific positive electrode plate and an electrolyte can exhibit a synergistic effect, which can not only improve the adsorption and protection effects of the first additive (nitrile additive) for the positive electrode plate, but also allow the first additive and the positive electrode plate to have an excellent electrochemical stability, mainly because the nitrile additive is adsorbed on the surface of the positive electrode plate, isolating other components in the electrolyte from direct contact with the positive electrode plate, reducing the oxidation of the electrolyte on the positive electrode plate, thereby improving the cycling performance and safety performance of the battery. The reasons are as follows. In the present disclosure, the XRD diffraction pattern of the positive electrode active material layer of the battery has a 012 diffraction peak and a 006 diffraction peak, and the transition metals on these two crystal planes are easily exposed and contact with the electrolyte, which leads to the occurrence of side reactions, and because the exposed positions of the transition metals on these two crystal planes are different, the adsorption levels of different functional groups also vary. The cyano group in the first additive is easy to adsorb on the 012 crystal plane, while the element O in the first additive is easy to adsorb on the 006 crystal plane. Therefore, the first additive molecules can be tightly adsorbed on the surface of the positive electrode plate by specially designing the positive electrode plate and electrolyte, thus reducing the contact between the electrolyte and the positive electrode plate, inhibiting other components in the electrolyte from being oxidized and consumed, and further improving the cycling performance and safety performance of the battery. Furthermore, it is found that the cycling performance and safety performance of the battery can be further improved by controlling the diffraction angles of the 012 and 006 diffraction peaks. When the difference in diffraction peak angles is too small (for example less than or equal to 0.1°), the transition metal is easily exposed, increasing the risk of side reactions with the electrolyte. When the difference in diffraction peak angles is too large (for example greater than 1.05°), the functional groups in the electrolyte additives are difficult to adsorb onto the surface, the adsorption force is weakened, and the electrolyte can not be effectively isolated. In the present disclosure, the difference range of angles between the 012 diffraction peak and the 006 diffraction peak of the XRD diffraction pattern of the positive electrode active material layer of the battery is beneficial to the adsorption of element O and cyano group in the electrolyte on the surface of the positive electrode plate to form a stable interface film, which can effectively isolate the electrolyte.

In an embodiment, the difference between the angle value of the 012 diffraction peak and the angle value of the 006 diffraction peak ranges from 0.2° to 0.99°.

In an embodiment, the difference between the angle value of the 012 diffraction peak and the angle value of the 006 diffraction peak ranges from 0.5° to 0.9°.

In the present disclosure, a ratio of a number of moles of the cyano group to a number of moles of the element O in the first additive is ≤ 4, for example 4, 3.5, 3, 2.5, 2, 1.5, 1 or 0.5.

When the ratio of the number of moles of the cyano group to the number of moles of the element O is within a specific range, the adsorption of the first additive on the surface of the positive electrode plate can be improved, thereby improving the cycling performance and safety performance of the battery.

In an embodiment, the ratio of the number of moles of the cyano group to the number of moles of the element O in the first additive is ≤ 1.5.

In an embodiment, the ratio of the number of moles of the cyano group to the number of moles of the element O in the first additive is ≤ 1.

In the present disclosure, the first additive may include at least one of 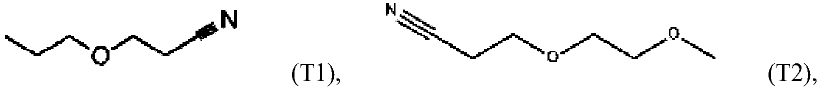 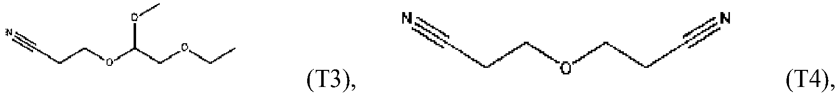 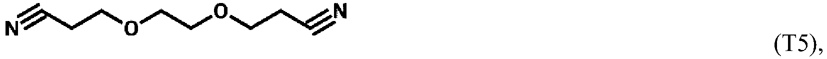 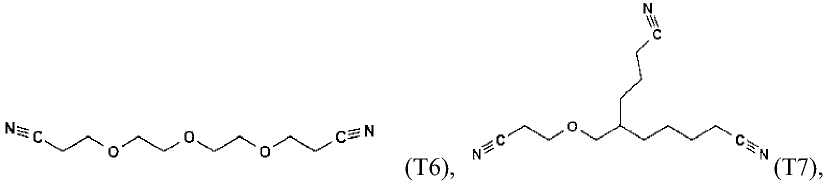 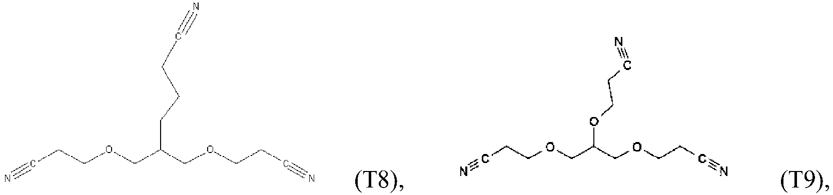 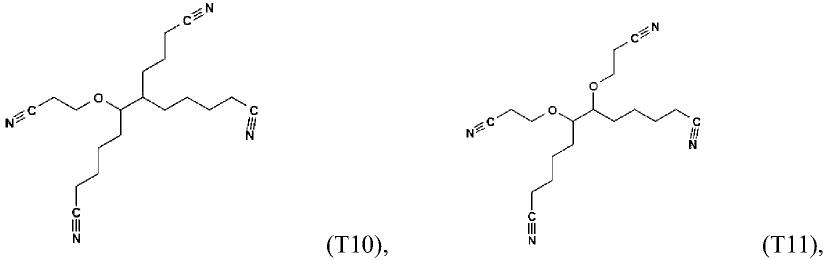 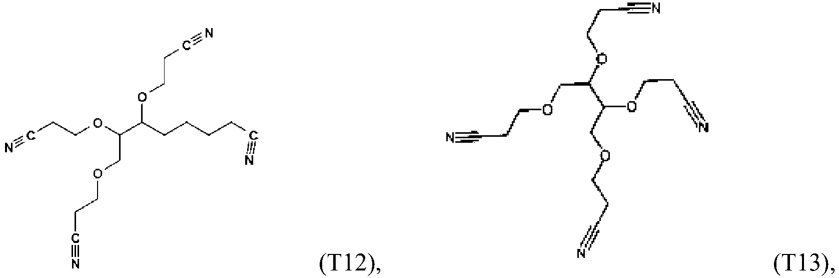 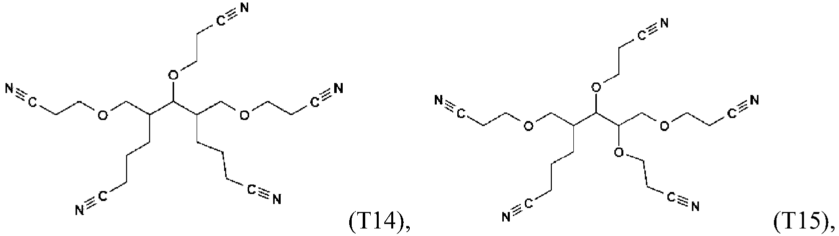 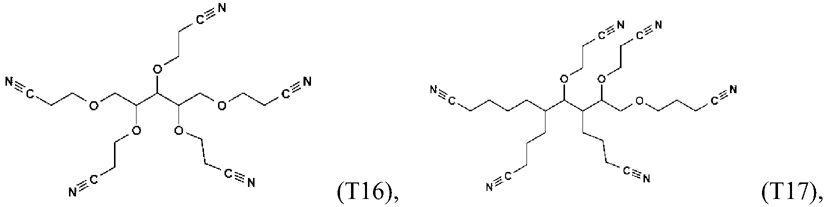 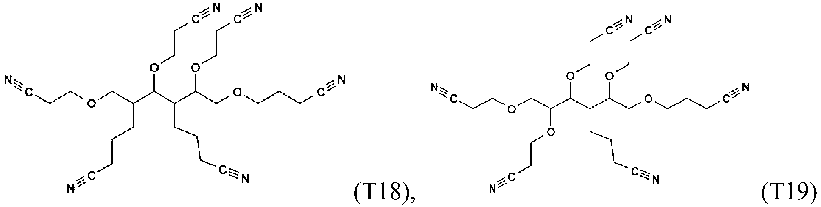 and

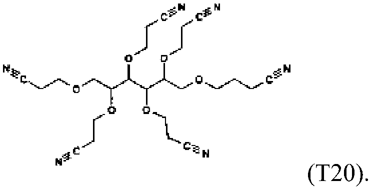

In an embodiment, the first additive includes at least one of

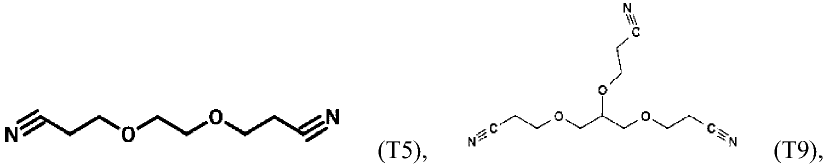

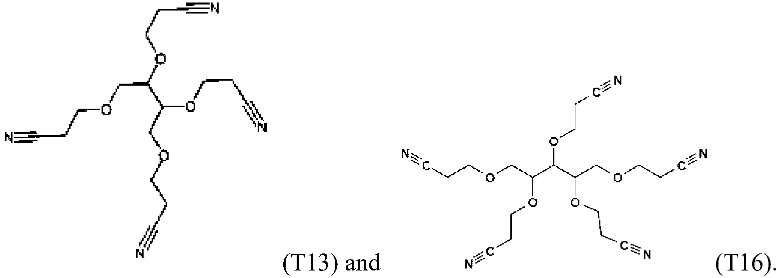

In the present disclosure, based on a total weight of the electrolyte, a content of the first additive may ranges from 0.23% to 5.34%, for example 0.23%, 0.5%, 1%, 1.5%, 2%, 2.5%, 3%, 3.5%, 4%, 4.5%, 5% or 5.34%.

In an embodiment, based on the total weight of the electrolyte, the content of the first additive ranges from 1 to 3%.

In the present disclosure, the content of the first additive in the electrolyte can be determined by means of a conventional test method in the art, for example gas chromatography (GC).

In the present disclosure, the positive electrode active material layer may include a positive electrode active material. The positive electrode active material may include doped and/or undoped lithium cobaltate. The doped lithium cobaltate may include a doping element, and the doping element may include at least one of Al, Mg, Ti, Zr, Ni, Mn, Y, La, Sr, W and Sc.

In the present disclosure, a mass content of the doping element in the positive electrode active material may range from 100 ppm to 10000 ppm, for example 100 ppm, 200 ppm, 300 ppm, 400 ppm, 500 ppm, 600 ppm, 700 ppm, 800 ppm, 900 ppm, 1000 ppm, 1500 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, 8500 ppm, 9000 ppm, 9500 ppm or 10000 ppm.

In an embodiment, the mass content of the doping element in the positive electrode active material ranges from 2000 ppm to 9000 ppm.

In an embodiment, the mass content of the doping element in the positive electrode active material ranges from 2000 ppm to 5000 ppm.

In the present disclosure, the types and the mass content of the doping element in the positive electrode active material can be determined by means of a conventional test method in the art, for example the types of the doping element can be determined by means of an energy spectrometer (EDS), and the mass content of the doping element can be determined by means of an inductively coupled plasma (ICP).

In the present disclosure, the electrolyte may further include a second additive, and the second additive may include

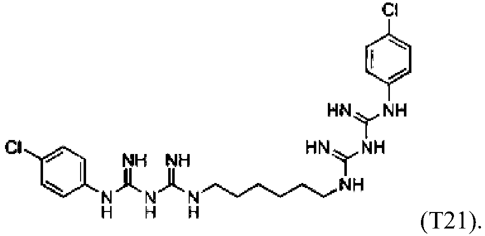

In the present disclosure, based on the total weight of the electrolyte, a content of the second additive may range from 0.1% to 5%, for example 0.1%, 0.5%, 1%, 1.5%, 2%, 2.5%, 3%, 3.5%, 4%, 4.5% or 5%.

In the present disclosure, the electrolyte may further include a third additive, and the third additive may include fluoroethylene carbonate.

In the present disclosure, the electrolyte may further include a lithium salt, and the lithium salt may include at least one of lithium perchlorate (LiClO₄), lithium hexafluorophosphate (LiPF₆), lithium difluorophosphate (LiPO₂F₂), lithium difluorooxalate borate (LiDFOB), lithium tetrafluoro(oxalato)phosphate (LiOTFP), lithium bis(fluorosulfonyl)imide (LiFSI), lithium bis(trifluoromethanesulphonyl)imide (LiTFSI), lithium bis(oxyalyl)difluorophosphate (LiDFBP), lithium tetrafluoroborate (LiBF₄), lithium bisoxalate borate (LiBOB), lithium hexafluoroantimonate (LiSbF₆), lithium hexafluoroarsenate (LiAsF₆), lithium 4,5-dicyano-2-trifluoromethylimidazole (LiTDI), lithium bis(pentafluoroethylsulfonyl)imide, lithium tris(trifluoromethylsulfonyl)methyl and lithium bis(trifluoromethylsulfonyl)imide.

In the present disclosure, based on the total weight of the electrolyte, a content of the lithium salt may range from 11% to 18%, for example 11%, 12%, 13%, 14%, 15%, 16%, 17% or 18%.

In the present disclosure, the types and the content of the lithium salt in the electrolyte can be determined by means of a conventional test methods in the art, for example ion chromatography (IC) or gas chromatography (GC).

In the present disclosure, the electrolyte may further include an organic solvent, and the organic solvent may include a carbonate compound and/or a carboxylate compound. The carbonate compound may include at least one of the following fluorine-substituted or unsubstituted solvents and ethylene carbonate (EC): propylene carbonate (PC), dimethyl carbonate (DMC), diethyl carbonate (DEC) and methyl ethyl carbonate (EMC). The carboxylate compound may includes at least one of the following fluorine-substituted or unsubstituted solvents: propyl acetate, n-butyl acetate, isobutyl acetate, n-amyl acetate, isoamyl acetate, propyl propionate (PP), ethyl propionate (EP), methyl butyrate and ethyl n-butyrate.

In the present disclosure, the positive electrode active material layer may further include a positive electrode conductive agent and a positive electrode binder.

The positive electrode conductive agent may include at least one of conductive carbon black, acetylene black, Ketjen black, conductive graphite, conductive carbon fibres, carbon nanotubes (including single-walled carbon nanotubes and multi-walled carbon nanotubes), metal powder and carbon fibres. The positive electrode binder may include at least one of polyvinylidene fluoride (PVDF), sodium carboxymethyl cellulose, styrene-butadiene latex, polytetrafluoroethylene and polyethylene oxide.

In the present disclosure, based on a total weight of the positive electrode active material layer, a content of the positive electrode active material may range from 80% to 99.8% (for example 80%, 81%, 82%, 83%, 84%, 85%, 86%, 87%, 88%, 89%, 90%, 91%, 92%, 93%, 94%, 95%, 96%, 97%, 98%, 99% or 99.8%), a content of the positive electrode conductive agent may range from 0.1 to 10% (for example 10%, 9%, 8%, 7%, 6%, 5%, 4%, 3%, 2%, 1%, 0.5% or 0.1%), and a content of the positive electrode binder may range from 0.1% to 10% (for example 10%, 9%, 8%, 7%, 6%, 5%, 4%, 3%, 2%, 1%, 0.5% or 0.1%).

In an embodiment, based on the total weight of the positive electrode active material layer, the content of the positive electrode active material ranges from 90% to 99.6%, the content of the positive electrode conductive agent ranges from 0.2% to 5%, and the content of the positive electrode binder ranges from 0.2% to 5%.

In the present disclosure, the components (for example a negative electrode plate and a separator) of the battery in addition to the positive electrode plate and the electrolyte can be conventional choices in the art.

In an embodiment, the battery further includes a negative electrode plate and a separator.

In the present disclosure, the negative electrode plate may include a negative electrode current collector and a negative electrode coating layer on a surface of at least one side of the negative electrode current collector. The negative electrode coating layer includes a negative electrode active material, a negative electrode conductive agent and a negative electrode binder.

The negative electrode active material may include a carbon-based material and/or a silicon-based material. The carbon-based material may include at least one of artificial graphite, natural graphite, mesocarbon microbeads, hard carbon and soft carbon. The silicon-based material may include at least one of a silicon-oxygen material or a silicon-carbon material, for example at least one of Si, SiC and SiOₓ(0 < x < 2). The negative electrode conductive agent may include at least one of conductive carbon black, acetylene black, Ketjen black, conductive graphite, conductive carbon fibres, carbon nanotubes (including single-walled carbon nanotubes and multi-walled carbon nanotubes), metal powder and carbon fibres. The negative electrode binder may include at least one of sodium carboxymethyl cellulose, styrene-butadiene rubber, polytetrafluoroethylene and polyethylene oxide.

In the present disclosure, based on a total weight of the negative electrode coating layer, a content of the negative electrode active material may range from 80% to 99.8% (for example 80%, 81%, 82%, 83%, 84%, 85%, 86%, 87%, 88%, 89%, 90%, 91%, 92%, 93%, 94%, 95%, 96%, 97%, 98%, 99% or 99.8%), a content of the negative electrode conductive agent may range from 0.1% to 10% (for example 10%, 9%, 8%, 7%, 6%, 5%, 4%, 3%, 2%, 1%, 0.5% or 0.1%), and a content of the negative electrode binder may range from 0.1% to 10% (for example 10%, 9%, 8%, 7%, 6%, 5%, 4%, 3%, 2%, 1%, 0.5% or 0.1%).

In an embodiment, based on the total weight of the negative electrode coating layer, the content of the negative electrode active material ranges from 90% to 99.6%, the content of the negative electrode conductive agent ranges from 0.2% to 5%, and the content of the negative electrode binder ranges from 0.2% to 5%.

In the present disclosure, the separator can be selected from the separators commonly used in the art, for example at least one of polyethylene film or polypropylene film (PP).

In the present disclosure, the battery can be assembled in accordance with conventional methods in the art.

The present disclosure further provides a method for preparing the positive electrode active material, which includes at least the following steps:
(1) adding a cobalt source, a complexing agent and a base into a solvent to mix until uniform and perform a first reaction;
(2) subjecting the product obtained in step (1) to a first calcination; and
(3) subjecting the lithium source, the product obtained in step (2) and a compound containing a doping element to a second calcination.

In the present disclosure, in step (1), the cobalt source may include at least one of cobalt acetate, cobalt oxalate, cobalt nitrate, cobalt sulfate, cobalt chloride and cobalt hydroxide.

In the present disclosure, in step (1), the complexing agent may include aqueous ammonia.

In the present disclosure, the mass concentration of the aqueous ammonia is 20%-25%, for example 20%, 21%, 21.5%, 22%, 22.5%, 23%, 23.5%, 24%, 24.5% or 25%.

In the present disclosure, in step (1), the base may include a soluble base containing carbonate. The soluble base containing carbonate may include at least one of Na₂CO₃, NH₄HCO₃ and (NH₄)₂CO₃.

In the present disclosure, in step (1), the solvent may include deionized water.

In the present disclosure, in step (1), the temperature of the first reaction is 30°C-80°C (for example 30°C, 40°C, 50°C, 60°C, 70°C or 80°C), and the time of the first reaction is 10 h-20 h (for example 10 h, 11 h, 12 h, 13 h, 14 h, 15 h, 16 h, 17 h, 18 h, 19 h or 20 h).

In the present disclosure, in step (1), the cobalt source, the complexing agent and the base are dissolved into water, wherein the concentration of the cobalt source may be 0.8 mol/L-3.8 mol/L (for example 0.8 mol/L, 1 mol/L, 2 mol/L, 3 mol/L or 3.8 mol/L), the concentration of the base may be 0.8 mol/L-3.8 mol/L (for example 0.8 mol/L, 1 mol/L, 2 mol/L, 3 mol/L or 3.8 mol/L), the concentration of the complexing agent may be 0.1 mol/L-4 mol/L (for example 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1 mol/L, 1.5 mol/L, 2 mol/L, 2.5 mol/L, 3 mol/L, 3.5 mol/L or 4 mol/L), and the base and the cobalt source are subjected to the first reaction in the presence of the complexing agent to form cobalt carbonate.

In the present disclosure, in step (2), the temperature of the first calcination may be 920°C-1000°C (for example 920°C, 930°C, 940°C, 950°C, 960°C, 970°C, 980°C, 990°C or 1000°C), and the time of the first calcination may be 8 h-12 h (for example 8 h, 9 h, 10 h, 11 h or 12 h).

In the present disclosure, in step (3), the lithium source includes at least one of lithium hydroxide, lithium nitrate, lithium carbonate, lithium oxalate, lithium acetate, lithium oxide and lithium citrate.

In the present disclosure, in step (3), the compound containing a doping element includes at least one of oxide, chloride, hydroxide, carbonate, sulfate, nitrate, oxalate and acetate containing the doping element.

In the present disclosure, the doping element may include at least one of Al, Mg, Ti, Zr, Ni, Mn, Y, La, Sr, W and Sc.

In an embodiment, the compound containing a doping element includes at least one of Al₂(SO₄)₃, AlCl₃ and Al₂O₃.

In the present disclosure, in step (3), the temperature of the second calcination may be 900°C-1200°C (for example 900°C, 910°C, 920°C, 930°C, 940°C, 950°C, 960°C, 970°C, 980°C, 990°C, 1000°C, 1010°C, 1020°C, 1030°C, 1040°C, 1050°C, 1060°C, 1070°C, 1080°C, 1090°C, 1100°C, 1150°C or 1200°C), and the time of the second calcination may be 8 h-15 h (for example 8 h, 9 h, 10 h, 11 h, 12 h, 13 h, 14 h or 15 h).

It should be noted that the numerical representations of "first", "second", etc., in the present disclosure are merely used to distinguish different substances or modes of use rather than indicating an order.

The present disclosure will be described in detail below by means of examples. The examples described in the present disclosure are only some, rather than all, of the examples of the present disclosure. Based on the examples of the present disclosure, all other examples obtained by those of ordinary skill in the art without creative efforts fall within the scope of protection of the present disclosure.

In the following examples, unless otherwise specified, all the materials used are commercially available and analytically pure.

### Preparation example 1

A positive electrode active material was prepared according to the following method:
(1) cobalt acetate, aqueous ammonia (with a mass concentration of 22%) and Na₂CO₃ were mixed until uniform in a mass ratio of 177: 35.05: 106, then deionized water was added (wherein the concentration of cobalt acetate was 2.5 mol/L and the concentration of Na₂CO₃ was 2.5 mol/L), and the mixture was reacted at 50°C for 15 h;
(2) the product obtained in step (1) was calcined at 950°C for 10 h; and
(3) lithium hydroxide, the product obtained in step (2) and Al₂(SO₄)₃ (calculated as Al) were mixed in a molar ratio of 1: 1: 0.1, and the mixture was calcined at 1000°C for 10 h.

### Preparation example 2

(1) Cobalt acetate, aqueous ammonia (with a mass concentration of 22%) and Na₂CO₃ were mixed until uniform in a mass ratio of 177: 35.05: 106, then deionized water was added (wherein the concentration of cobalt acetate was 2.5 mol/L and the concentration of Na₂CO₃ was 2.5 mol/L), and the mixture was reacted at 50°C for 15 h;
(2) the product obtained in step (1) was calcined at 950°C for 10 h; and
(3) lithium hydroxide, the product obtained in step (2) and Al₂(SO₄)₃ (calculated as Al) were mixed in a molar ratio of 1: 1: 0.1, and the mixture was calcined at 1000°C for 8 h.

### Preparation example 3

(1) Cobalt acetate, aqueous ammonia (with a mass concentration of 22%) and Na₂CO₃ were mixed until uniform in a mass ratio of 177: 35.05: 106, then deionized water was added (wherein the concentration of cobalt acetate was 2.5 mol/L and the concentration of Na₂CO₃ was 2.5 mol/L), and the mixture was reacted at 50°C for 15 h;
(2) the product obtained in step (1) was calcined at 950°C for 12 h; and
(3) lithium hydroxide, the product obtained in step (2) and Al₂(SO₄)₃ (calculated as Al) were mixed in a molar ratio of 1: 1: 0.1, and the mixture was calcined at 1050°C for 12 h.

### Preparation example 4

A positive electrode active material was prepared according to the following method:
(1) cobalt chloride, aqueous ammonia (with a mass concentration of 20%) and NH₄HCO₃ were mixed until uniform in a mass ratio of 177: 35.05: 79, then deionized water was added (wherein the concentration of cobalt chloride was 3.5 mol/L and the concentration of NH₄HCO₃ was 3.5 mol/L), and the mixture was reacted at 30°C for 20 h;
(2) the product obtained in step (1) was calcined at 920°C for 12 h; and
(3) lithium carbonate, the product obtained in step (2) and AlCl₃ (calculated as Al) were mixed in a molar ratio of 1: 1: 0.1, and the mixture was calcined at 920°C for 8.2 h.

### Preparation example 5

A positive electrode active material was prepared according to the following method:
(1) cobalt hydroxide, aqueous ammonia (with a mass concentration of 25%) and (NH₄)₂CO₃ were mixed until uniform in a mass ratio of 177: 35.05: 96, then deionized water was added (wherein the concentration of cobalt hydroxide was 2.5 mol/L and the concentration of (NH₄)₂CO₃ was 2.5 mol/L), and the mixture was reacted at 80°C for 10 h;
(2) the product obtained in step (1) was calcined at 1000°C for 8 h; and
(3) lithium oxide, the product obtained in step (2) and Al₂O₃ (calculated as Al) were mixed in a molar ratio of 1: 1: 0.1, and the mixture was calcined at 1200°C for 14 h.

### Preparation example 6

A positive electrode active material was prepared according to the following method:
(1) cobalt chloride, aqueous ammonia (with a mass concentration of 20%) and NH₄HCO₃ were mixed until uniform in a mass ratio of 177: 35.05: 79, then deionized water was added (wherein the concentration of cobalt chloride was 3.5 mol/L and the concentration of NH₄HCO₃ was 3.5 mol/L), and the mixture was reacted at 30°C for 20 h;
(2) the product obtained in step (1) was calcined at 900°C for 11 h; and
(3) lithium carbonate, the product obtained in step (2) and AlCl₃ (calculated as Al) were mixed in a molar ratio of 1: 1: 0.1, and the mixture was calcined at 900°C for 8 h.

### Preparation example 7

A positive electrode active material was prepared according to the following method:
(1) cobalt hydroxide, aqueous ammonia (with a mass concentration of 25%) and (NH₄)₂CO₃ were mixed until uniform in a mass ratio of 177: 35.05: 96, then deionized water was added (wherein the concentration of cobalt hydroxide was 2.5 mol/L and the concentration of (NH₄)₂CO₃ was 2.5 mol/L), and the mixture was reacted at 80°C for 10 h;
(2) the product obtained in step (1) was calcined at 1000°C for 10 h; and
(3) lithium oxide, the product obtained in step (2) and Al₂O₃ (calculated as Al) were mixed in a molar ratio of 1: 1: 0.1, and the mixture was calcined at 1200°C for 15 h.

### Preparation example 8 group

### Preparation example 8a

This preparation example was carried out with reference to Preparation example 1, except that in step (3), lithium oxide, the product obtained in step (2) and Al₂O₃ (calculated as Al) were mixed in a molar ratio of 1: 1: 0.01.

### Preparation example 8b

This preparation example was carried out with reference to Preparation example 1, except that in step (3), lithium oxide, the product obtained in step (2) and Al₂O₃ (calculated as Al) were mixed in a molar ratio of 1: 1: 0.007.

### Preparation example 8c

This preparation example was carried out with reference to Preparation example 1, except that in step (3), lithium oxide, the product obtained in step (2) and Al₂O₃ (calculated as Al) were mixed in a molar ratio of 1: 1: 0.018.

### Preparation example 8d

This preparation example was carried out with reference to Preparation example 1, except that in step (3), lithium oxide, the product obtained in step (2) and Al₂O₃ (calculated as Al) were mixed in a molar ratio of 1: 1: 0.032.

### Preparation example 9 group

### Preparation example 9a

This preparation example was carried out with reference to Preparation example 1, except that in step (3), Al₂(SO₄)₃ was replaced by NiSO₄, and the molar ratio of lithium hydroxide, the product obtained in step (2) and NiSO₄ (calculated as Ni) was 1: 1: 0.0045.

### Preparation example 9b

This preparation example was carried out with reference to Preparation example 1, except that in step (3), Al₂(SO₄)₃ was replaced by MgSO₄, and the molar ratio of lithium hydroxide, the product obtained in step (2) and MgSO₄ (calculated as Mg) was 1: 1: 0.011.

### Preparation example 9c

This preparation example was carried out with reference to Preparation example 1, except that in step (3), Al₂(SO₄)₃ was replaced by MnSO₄, and the molar ratio of lithium hydroxide, the product obtained in step (2) and MnSO₄ (calculated as Mn) was 1: 1: 0.005.

### Preparation example 9d

This preparation example was carried out with reference to Preparation example 1, except that in step (3), Al₂(SO₄)₃ was replaced by TiSO₄, and the molar ratio of lithium hydroxide, the product obtained in step (2) and TiSO₄ (calculated as Ti) was 1: 1: 0.0055.

### Comparative preparation example

This comparative preparation example was carried out with reference to Preparation example 1, except that in step (3), calcination was carried out at 700°C for 7 h.

### Examples

A battery was prepared according to the following method:

### (1) Preparation of electrolyte

In a glove box filled with argon (H₂O < 0.1 ppm, and O₂ < 0.1 ppm), EC, PC, DEC and PP were mixed until uniform in a mass ratio of 1:2:4:3. To the above mixed solution was added 1 mol/L of fully dried lithium hexafluorophosphate (LiPF₆) and 5% of fluoroethylene carbonate based on the total mass of the electrolyte, then the materials with different contents in Table 1 were added, the mixture was stirred until uniform, and the electrolyte was obtained after passing the moisture and free acid tests.

### (2) Preparation of positive electrode plate

The positive electrode active material prepared in the Preparation Example, PVDF, conductive carbon black (SP) and single-walled carbon nanotubes (SWCNTs) were mixed in a weight ratio of 96:2:1.5:0.5, then N-methylpyrrolidone (NMP) was added, wherein the solids content was 70%, a positive electrode slurry was obtained by means of a vacuum mixer. The above positive electrode slurry was uniformly coated onto an aluminum foil; then the coated aluminum foil was dried, rolled and slit to obtain the positive electrode plate.

### (3) Preparation of negative electrode plate

Artificial graphite, silica, sodium carboxymethyl cellulose (CMC-Na), styrene-butadiene rubber, conductive carbon black (SP) and single-walled carbon nanotubes (SWCNTs) were mixed in a weight ratio of 79.5:15:2.5:1.5:1:0.5, then deionized water was added, wherein the solids content was 50%, a negative electrode slurry was obtained by means of a vacuum mixer. The above negative electrode slurry was uniformly coated onto an copper foil; then the coated copper foil was dried, rolled and slit to obtain the negative electrode plate.

### (4) Preparation of battery

The positive electrode plate obtained in step (2), separator (9 µm thick PP film) and the negative electrode plate obtained in step (3) were stacked in sequence and wound to obtain a battery cell. The bare battery cell was placed in the outer packaging aluminum foil, and the electrolyte obtained in step (1) was injected into the outer packaging. After vacuum packaging, standing, formation, shaping and sorting, a battery (with a charge and discharge range of 3.0 V-4.5 V) was obtained.

**Table 1**

| | Positive electrode active material | First additive | Content of first additive (% by weight) | Mass content of doping element (ppm) | Second additive | Content of second additive (% by weight) |
|---|---|---|---|---|---|---|
| Example 1 | Preparation example 1 | T5 | 2 | 2700 | / | / |
| Example 2 | Preparation example 1 | T9 | 1 | 2700 | / | / |
| Example 3 | Preparation example 1 | T13 | 3 | 2700 | / | / |
| Example 4a | Preparation example 2 | T5 | 2 | 2700 | / | / |
| Example 4b | Preparation example 3 | T5 | 2 | 2700 | / | / |
| Example 4c | Preparation example 4 | T5 | 2 | 2700 | / | / |
| Example 4d | Preparation example 5 | T5 | 2 | 2700 | / | / |
| Example 4e | Preparation example 6 | T5 | 2 | 2700 | / | / |
| Example 4f | Preparation example 7 | T5 | 2 | 2700 | / | / |
| Example 5a | Preparation example 1 | T16 | 2 | 2700 | / | / |
| Example 5b | Preparation example 1 | T8 | 2 | 2700 | / | / |
| Example 5c | Preparation example 1 | T19 | 2 | 2700 | / | / |
| Example 5d | Preparation example 1 | T4 | 2 | 2700 | / | / |
| Example 5e | Preparation example 1 | T11 | 2 | 2700 | / | / |
| Example 6a | Preparation example 1 | T5 | 0.23 | 2700 | / | / |
| Example 6b | Preparation example 1 | T5 | 5.34 | 2700 | / | / |
| Example 6c | Preparation example 1 | T5 | 0.1 | 2700 | / | / |
| Example 6d | Preparation example 1 | T5 | 7 | 2700 | / | / |
| Example 7a | Preparation example 8a | T5 | 2 | 270 | / | / |
| Example 7b | Preparation example 8b | T5 | 2 | 2000 | / | / |
| Example 7c | Preparation example 8c | T5 | 2 | 5000 | / | / |
| Example 7d | Preparation example 8d | T5 | 2 | 9000 | / | / |
| Example 8a | Preparation example 1 | T5 | 2 | 2700 | T21 | 0.1 |
| Example 8b | Preparation example 1 | T5 | 2 | 2700 | T21 | 1 |
| Example 8c | Preparation example 1 | T5 | 2 | 2700 | T21 | 3 |
| Examp le 8d | Preparation example 1 | T5 | 2 | 2700 | T21 | 5 |
| Examp le 9a | Preparation example 9a | T5 | 2 | 2700 | / | / |
| Examp le 9b | Preparation example 9b | T5 | 2 | 2700 | / | / |
| Examp le 9c | Preparation example 9c | T5 | 2 | 2700 | / | / |
| Examp le 9d | Preparation example 9d | T5 | 2 | 2700 | / | / |
| Compa rative exampl e 1 | Comparative preparation example | T5 | 2 | 2700 | / | / |
| Compa rative exampl e 2 | Preparation example 1 | / | / | 2700 | / | / |

### Test examples

### (1) XRD test

The batteries prepared in Example 1, Examples 4a-4f, Example 7 and Comparative example 1 were disassembled and the positive electrode active material layers were subjected to a XRD test by using a XRD-6100 X-ray diffractometer from Shimadzu (test conditions: a voltage of 40 KV, a current of 30 mA, a scanning range of 10-90 degrees, a step size of 0.02 degrees, and a scanning speed of 4 degrees/minute), and the test results were recorded in Table 2.

### (2) Cycling performance test

The batteries prepared in examples and comparative examples were subjected to a cycling performance test, and the specific test method was as follows.

At 25°C, the batteries were charged and discharged at a rate of 1 C for 100 cycles; the capacity after 100 cycles was divided by the capacity of the first cycle to obtain the cycling capacity retention rate, and the results were recorded in Table 2.

### (3) Thermal shock test

The batteries prepared in examples and comparative examples were subjected to a thermal shock test, and the specific test method was as follows.

The battery at 4.5 V was placed in an oven and heated from room temperature (25°C) to 180°C at a rate of 5°C/min. The time it took for the battery to ignite was tested, and the results were recorded in Table 2.

**Table 2**

| | Difference between angle value of 012 diffraction peak and angle value of 006 diffraction peak (°) | 100 T cycling capacity retention rate (%) | Ignition temperature (°C) |
|---|---|---|---|
| Example 1 | About 0.71 | 79.40 | 148 |
| Example 2 | / | 79.80 | 149 |
| Example 3 | / | 78.10 | 145 |
| Example 4a | About 0.5 | 78.60 | 146 |
| Example 4b | About 0.9 | 78.10 | 148 |
| Example 4c | About 0.24 | 73.10 | 140 |
| Example 4d | About 0.95 | 73.70 | 143 |
| Example 4e | About 0.15 | 60.60 | 138 |
| Example 4f | About 1.05 | 61.50 | 133 |
| Example 5a | / | 79.10 | 149 |
| Example 5b | / | 69.10 | 140 |
| Example 5c | / | 69.10 | 143 |
| Example 5d | / | 63.10 | 138 |
| Example 5e | / | 66.90 | 134 |
| Example 6a | / | 69.10 | 140 |
| Example 6b | / | 69.20 | 140 |
| Example 6c | / | 64.10 | 131 |
| Example 6d | / | 64.90 | 130 |
| Example 7a | About 0.71 | 57.00 | 125 |
| Example 7b | About 0.71 | 76.70 | 144 |
| Example 7c | About 0.71 | 79.30 | 145 |
| Example 7d | About 0.71 | 66.30 | 134 |
| Example 8a | / | 89.60 | 152 |
| Example 8b | / | 85.90 | 155 |
| Example 8c | / | 88.00 | 150 |
| Example 8d | / | 83.20 | 154 |
| Example 9a | About 0.71 | 75.50 | 141 |
| Example 9b | About 0.71 | 74.30 | 143 |
| Example 9c | About 0.71 | 73.80 | 144 |
| Example 9d | About 0.71 | 74.40 | 145 |
| Comparative example 1 | About 0.08 | 43.10 | 120 |
| Comparative example 2 | / | 33.90 | 127 |

As can be seen from Table 2, the battery of the present disclosure has a higher cycling capacity retention and ignition temperature compared to that of the comparative examples.

The preferred embodiments of the present disclosure have been described in detail above; however, the present disclosure is not limited thereto. Within the technical concept of the present disclosure, various simple modifications can be made to the technical solution of the present disclosure, including the combination of various technical features in any other suitable way. These simple modifications and combinations should also be regarded as the content disclosed by the present disclosure and all fall within the scope of protection of the present disclosure.

## Claims

1. A battery, **characterized by** comprising a positive electrode plate and an electrolyte, the positive electrode plate comprises a positive electrode current collector and a positive electrode active material layer on a surface of at least one side of the positive electrode current collector, an XRD diffraction pattern of the positive electrode active material layer has a 012 diffraction peak and a 006 diffraction peak, and a difference between an angle value of the 012 diffraction peak and an angle value of the 006 diffraction peak is >0.1°; and the electrolyte comprises a first additive, and the first additive comprises element O and a cyano group.

2. The battery according to claim 1, **characterized in that** the difference between the angle value of the 012 diffraction peak and the angle value of the 006 diffraction peak ranges from 0.2° to 0.99°; preferably, ranges from 0.5° to 0.9°.

3. The battery according to claim 1 or 2, **characterized in that** a ratio of a number of moles of the cyano group to a number of moles of the element O in the first additive is ≤ 4;
preferably, the ratio of the number of moles of the cyano group to the number of moles of the element O in the first additive is ≤ 1.5;
more preferably, the ratio of the number of moles of the cyano group to the number of moles of the element O in the first additive is ≤ 1.

4. The battery according to any one of claims 1-3, **characterized in that** the first additive comprises at least one of 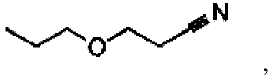 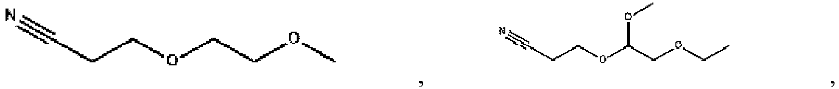 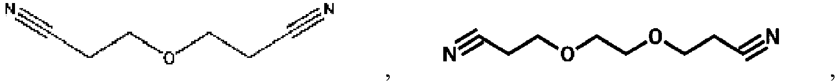 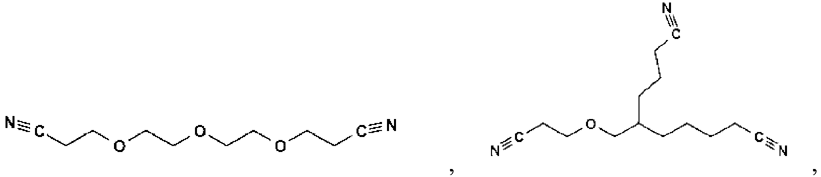 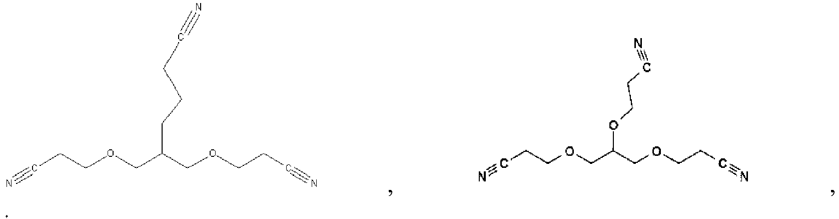 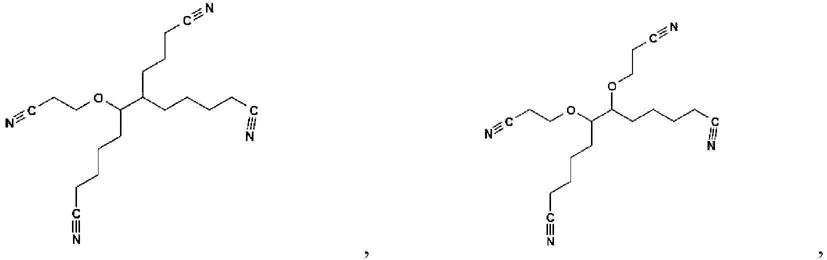 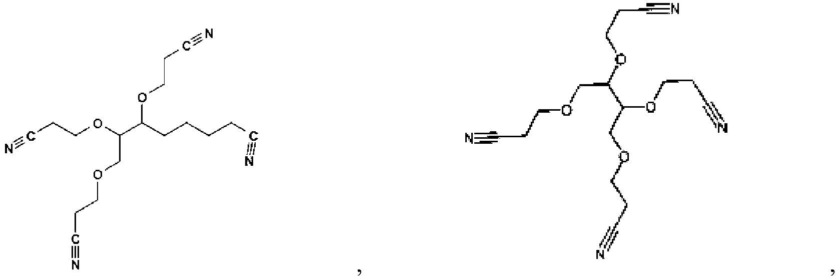 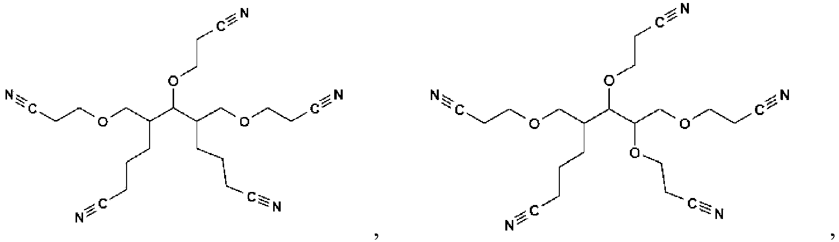 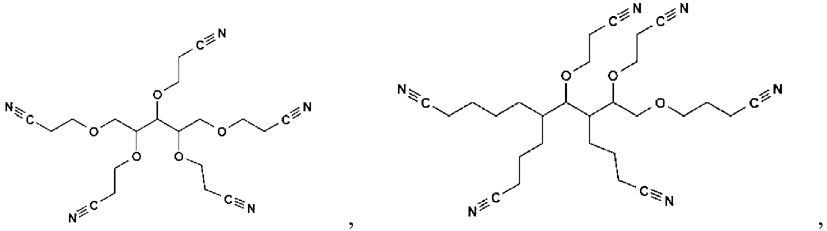 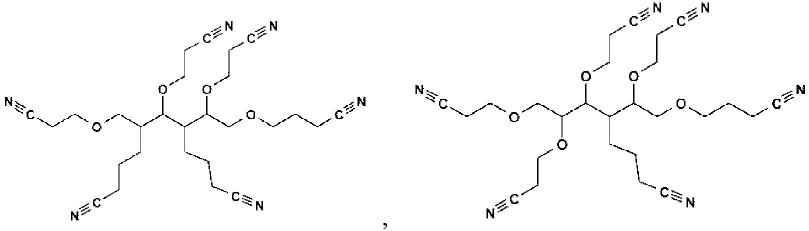 and 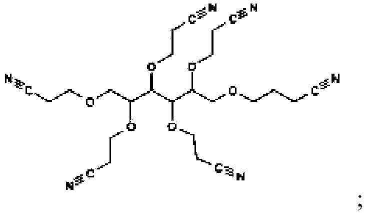 preferably, the first additive comprises at least one of

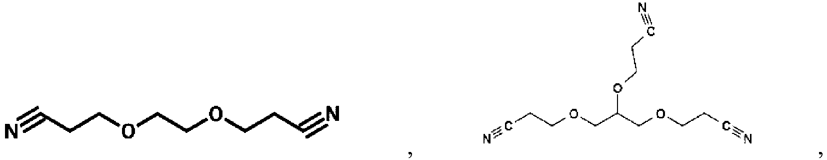

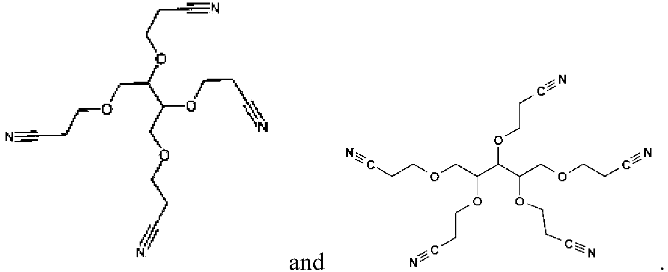

5. The battery according to any one of claims 1-4, **characterized in that** based on a total weight of the electrolyte, a content of the first additive ranges from 0.23% to 5.34%; preferably, ranges from 1% to 3%.

6. The battery according to any one of claims 1-5, **characterized in that** the positive electrode active material layer comprises a positive electrode active material, and the positive electrode active material comprises doped and/or undoped lithium cobaltate;
preferably, the doped lithium cobaltate comprises a doping element, and the doping element comprises at least one of Al, Mg, Ti, Zr, Ni, Mn, Y, La, Sr, W and Sc.

7. The battery according to claim 6, **characterized in that** a mass content of the doping element in the positive electrode active material ranges from 100 ppm to 10000 ppm; preferably, ranges from 2000 ppm to 5000 ppm.

8. The battery according to any one of claims 1-7, **characterized in that** the electrolyte further comprises a second additive, and the second additive comprises 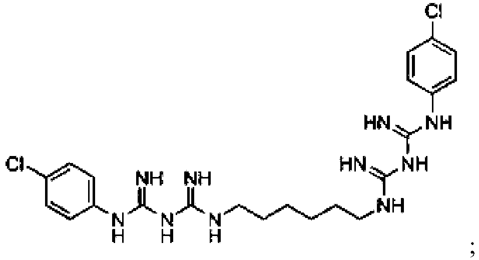 preferably, based on a total weight of the electrolyte, a content of the second additive ranges from 0.1% to 5%.

9. The battery according to any one of claims 1-8, **characterized in that** the electrolyte further comprises a third additive, and the third additive comprises fluoroethylene carbonate.

10. The battery according to any one of claims 1-9, **characterized in that** the electrolyte further comprises a lithium salt, and the lithium salt comprises at least one of lithium perchlorate, lithium hexafluorophosphate, lithium difluorophosphate, lithium difluorooxalate borate, lithium tetrafluoro(oxalato)phosphate, lithium bis(fluorosulfonyl)imide, lithium bis(trifluoromethanesulphonyl)imide, lithium bis(oxyalyl)difluorophosphate, lithium tetrafluoroborate, lithium bisoxalate borate, lithium hexafluoroantimonate, lithium hexafluoroarsenate, lithium 4,5-dicyano-2-trifluoromethylimidazole, lithium bis(pentafluoroethylsulfonyl)imide, lithium tris(trifluoromethylsulfonyl)methyl and lithium bis(trifluoromethylsulfonyl)imide;
preferably, based on a total weight of the electrolyte, a content of the lithium salt ranges from 11% to 18%.

11. The battery according to any one of claims 1-10, **characterized in that** the electrolyte further comprises an organic solvent, and the organic solvent comprises a carbonate compound and/or a carboxylate compound;
preferably, the carbonate compound comprises at least one of the following fluorine-substituted or unsubstituted solvents and ethylene carbonate: propylene carbonate, dimethyl carbonate, diethyl carbonate and methyl ethyl carbonate;
preferably, the carboxylate compound comprises at least one of the following fluorine-substituted or unsubstituted solvents: propyl acetate, n-butyl acetate, isobutyl acetate, n-amyl acetate, isoamyl acetate, propyl propionate, ethyl propionate, methyl butyrate and ethyl n-butyrate.

12. The battery according to any one of claims 1-11, **characterized in that** the positive electrode active material layer further comprises a positive electrode binder and a positive electrode conductive agent;
preferably, the positive electrode conductive agent comprises at least one of conductive carbon black, acetylene black, Ketjen black, conductive graphite, conductive carbon fibres, carbon nanotubes, metal powder and carbon fibres;
preferably, the positive electrode binder comprises at least one of polyvinylidene fluoride, sodium carboxymethyl cellulose, styrene-butadiene latex, polytetrafluoroethylene and polyethylene oxide.

13. The battery according to claim 12, **characterized in that** based on a total weight of the positive electrode active material layer, a content of the positive electrode active material ranges from 80% to 99.8%, a content of the positive electrode conductive agent ranges from 0.1% to 10%, and a content of the positive electrode binder ranges from 0.1% to 10%,
preferably, based on the total weight of the positive electrode active material layer, the content of the positive electrode active material ranges from 90% to 99.6%, the content of the positive electrode conductive agent ranges from 0.2% to 5%, and the content of the positive electrode binder ranges from 0.2% to 5%.

14. The battery according to any one of claims 1-13, **characterized in that** the battery further comprises a negative electrode plate; the negative electrode plate comprises a negative electrode current collector and a negative electrode coating layer on a surface of at least one side of the negative electrode current collector, and the negative electrode coating layer comprises a negative electrode active material, a negative electrode conductive agent and a negative electrode binder;
preferably, the negative electrode active material comprises a carbon-based material and/or a silicon-based material; the carbon-based material comprises at least one of artificial graphite, natural graphite, mesocarbon microbeads, hard carbon and soft carbon; and the silicon-based material comprises at least one of a silicon-oxygen material or a silicon-carbon material;
preferably, the negative electrode conductive agent comprises at least one of conductive carbon black, acetylene black, Ketjen black, conductive graphite, conductive carbon fibres, carbon nanotubes, metal powder and carbon fibres;
preferably, the negative electrode binder comprises at least one of sodium carboxymethyl cellulose, styrene-butadiene rubber, polytetrafluoroethylene and polyethylene oxide.

15. The battery according to claim 14, **characterized in that** based on a total weight of the negative electrode coating layer, a content of the negative electrode active material ranges from 80% to 99.8%, a content of the negative electrode conductive agent ranges from 0.1% to 10%, and a content of the negative electrode binder ranges from 0.1% to 10%;
preferably, based on the total weight of the negative electrode coating layer, the content of the negative electrode active material ranges from 90% to 99.6%, the content of the negative electrode conductive agent ranges from 0.2% to 5%, and the content of the negative electrode binder ranges from 0.2% to 5%.
